# EUROPÄISCHE PATENTANMELDUNG

(11) **EP 2 047 772 A1**
(43) Veröffentlichungstag der Anmeldung: **15.04.2009**
(21) Anmeldenummer: 08017597.9
(22) Anmeldetag: 08.10.2008
(51) Int. Cl.: A47C 27/14, A47C 31/12, A47F 7/30

(54) **Beratungsvorrichtung für Bettpolsterungen**

(30) Priorität: 09.10.2007 DE 202007014063 U
(71) Anmelder: Heerklotz, Siegfried, 49143 Schledehausen (DE)
(72) Erfinder: Heerklotz, Siegfried, 49143 Schledehausen (DE)

(57) **Zusammenfassung**

Beratungsvorrichtung zur Messung eines Kunden im Ladengeschäft, richtigen Auswahl der Stauchhärten in einer Bettpolsterung - wie Matratzen, Unterfederungen oder Bettsysteme - hinsichtlich Haltbarkeit und Orthopädie unabhängig von der Verkäuferkompetenz als Empfehlung, sofortige Präsentation und Test dieser individuell angepassten Bettpolsterung mit der Freiheit beliebiger Korrektur nach Kundenwunsch und sofortiger Überprüfung.

Die Beratungsvorrichtung präsentiert eine bisher praktisch unmögliche Vielfalt wirklich unterschiedlicher Bettpolsterungen - bei 12 Polsterblöcken über 80 sinnvoll verschiedene Bettpolsterungen - auf der Fläche einer einzigen.

Mit zumindest einem Messgerät (11) zur Ermittlung von Messdaten, einem Computer (3) und zumindest drei sich in ihren Stauchhärten unterscheidenden Polsterblöcken (2).

Die Polsterblöcke (2) sind in vielen verschiedenen Kombinationen (6,60) mit jeweils zumindest zwei horizontal nebeneinander liegenden Härtezonen (8) unterschiedlicher Gesamt-Stauchhärte zu einer Bettpolsterung (7) zusammenlegbar. Der mit einer entsprechenden Software programmierte Computer (3) berechnet, benennt und zeigt nach Eingabe der Messdaten des Körpers eines künftigen Benutzers die dafür optimale Kombination (60) an.

## Beschreibung

Die Erfindung **betrifft** eine Beratungsvorrichtung für Bettpolsterungen, wie Matratzen, Unterfederungen oder Bettsysteme, mit zumindest einem Messgerät zur Ermittlung von Messdaten, einem Computer aus zumindest je einer/m Hauptplatine, Prozessor, Speicher, visuellen Ausgabegerät und Eingabegerät und zumindest drei sich in ihren Stauchhärten unterscheidenden Polsterblöcken.

**Bekannt** sind Beratungsvorrichtungen für Matratzen mit Messgeräten und Computer, bei denen der Computer aus vier verschiedenen Matratzen eine empfiehlt. Hier werden zwar Messungen vorgenommen, die jedoch kaum Konsequenzen haben.

Nach Körperformmessungen und Auswertung von Tabellen werden einzelne Latten von Lattenrosten in ihrer vertikalen Lage variiert. Das dauert für den Kunden im Ladengeschäft bis zu unakzeptablen 45 Minuten und hat den Nachteil der Lageabhängigkeit zumindest in Längsrichtung. Der Einfluss der aufliegenden Matratze ist aber für eine Bettpolsterung deutlich größer der des Lattenrostes als Unterfederung. Bei heute üblichen Matratzendicken von über 14cm ist der Einfluss der Unterfederung im Vergleich dazu praktisch sogar vernachlässigbar.

Es werden Messungen vorgenommen und dem Kunden eine versprochen optimale Matratze geliefert, bei der in Ausnehmungen Polsterteile unterschiedlicher Stauchhärte eingesetzt sind. Er hat jedoch keine Möglichkeit diese zuvor zu testen.

Es gibt Matratzengrundkörper, in deren Ausnehmungen während der Beratung wahlweise Polsterteile unterschiedlicher Stauchhärte eingesetzt werden. Der Kunde entscheidet nach aktuellem Wohlbefinden. Die Polsterteile lagern einzeln oder übereinander lose in Regalen oder auf dem Boden.

Grundproblem ist, dass gesunder Komfort und Haltbarkeit nicht durch Materialmasse sondern durch Abstimmung geschaffen werden, jeder Berater aber nur so wenig wie möglich Matratzen, Unterfederungen bzw. Bettsysteme bevorratet. Optimaler, dauerhafter Komfort entsteht durch wirksame, orthopädisch richtige Abstimmung - in erster Priorität der Matratze bzw. der Polsterauflage und erst in zweiter Priorität der Unterfederung -, die für 95% des Gesamtspektrums an Körperformen und Körpergewichten eine Bandbreite an Stauchhärten von 500% erfordert.

Dazu kommt, dass es bei der kurzzeitigen Beratung kaum einem Kunden möglich ist, allein ein fundiertes, langfristig sicheres Urteil zu fällen. Auch der Berater, von dem er also abhängig ist, ist in seiner Kompetenz begrenzt, worin der Kunde keinen Einblick hat. Der Berater engagiert sich nur bei leichter Handhabung, wenig Platz- und Kostenaufwand und ein ordentlich aufgeräumtes Erscheinungsbild ohne großen Handlungsbedarf.

Der Erfindung liegt die **Aufgabe** zugrunde, eine Beratungsvorrichtung der eingangs angegebenen Art zu schaffen, mit der jeder Verkäufer seinem Kunden beim Erstkontakt im Ladengeschäft oder in der Praxis eine jeweils orthopädisch fundiert abgestimmte und dauerhaltbare Bettpolsterung "nach Maß" ermitteln und leicht zu handhabend sofort zum Test präsentieren kann, wobei nachträgliche Variationen auf einfache Weise ebenfalls sofort realisier- und prüfbar sein sollen bei einem Platzbedarf von höchstens vier Liegeplätzen, d.h. ca. 15 m², und einer Investitionssumme unter 5000 €.

Diese Aufgabe wird nach der **Erfindung** gelöst durch zumindest drei sich in ihren Stauchhärten unterscheidende Polsterblöcke, die in mehreren verschiedenen Kombinationen mit jeweils zumindest zwei horizontal nebeneinander liegenden Härtezonen unterschiedlicher Gesamt-Stauchhärte zu einer Bettpolsterung zusammenlegbar sind, aus denen der mit einer entsprechenden Software programmierte Computer zumindest nach Eingabe der Messdaten des Körpers eines künftigen Benutzers zumindest eine Kombination berechnet, benennt und anzeigt.

**Bei dieser Ausgestaltung** der Beratungsvorrichtung steht dem Berater in seinem Ladengeschäft ein geordneter Baukasten von Polsterblöcken unterschiedlicher Stauchhärte zur Präsentation einer bisher praktisch unmöglichen Vielfalt wirklich unterschiedlicher Bettpolsterungen - bei 12 Polsterblöcken über 80 sinnvoll verschiedene - auf der Fläche einer einzigen zur Verfügung.

Dabei kann die Vielfalt durch unterschiedliche Kombination von Polsterblöcken zu unterschiedlichen Matratzen - mit gleicher kompletter Unterfederung oder wahlweise verschiedener kompletter Unterfederungen -, zu unterschiedlichen Unterfederungen - mit gleicher kompletter oder wahlweise verschiedener kompletter Matratzen - oder zu beiden als Bettsystem erzielt werden. Im letzten Fall kann je ein Satz von Polsterblöcken zu einer Matratze bzw. zu einer Unterfederung oder ein Satz zu einem ganzen Bettsystem kombiniert werden. Wird nur Matratze oder Unterfederung aus mehreren Polsterblöcken kombiniert, kann der Computer zusätzlich komplette Unterfederungen bzw. Matratzen empfehlen oder Empfehlungen zu ihrem Aufbau in der Fertigung berechnen und anzeigen. Dabei sind auch Hinweise auf zulässige Abweichungen von den Empfehlungen möglich.

Innerhalb von 5 Minuten lassen sich die wenigen Messdaten des Kunden aufnehmen und eingeben, berechnet und zeigt der Computer die hinsichtlich Physiologie und Haltbarkeit optimale Kombination unabhängig von der Beraterkompetenz als Empfehlung, die der Berater sofort durch einfaches Zusammenlegen der angezeigten Polsterblöcke in der angegebenen Position zu einer individuell angepassten Bettpolsterung dem Kunden zum Test präsentieren kann. Die Freiheit beliebiger Korrektur nach Kundenwunsch und sofortiger Überprüfung ist beliebig oft gegeben. Der Investitionsbedarf liegt etwa bei 2000 €.

**In weiterer Ausgestaltung** der Erfindung bestehen die Kombinationen aus horizontal nebeneinander angeordneten Polsterblöcken vorzugsweise gleicher Dicke und sind insbesondere einlagig.

Die Handhabung ist am leichtesten, wenn die Polsterblöcke entsprechend einer kompletten Matratze, Unterfederung bzw. einem kompletten Bettsystem aufgebaut sind, d.h. im Falle einer Matratze aus Kern, Auflagen und eigener Hülle. Dann ist nicht erst eine Hülle zu öffnen und nach dem Einsetzen wieder zu schließen.

Der Zugriff wird vereinfacht, indem die Beratungsvorrichtung über fünf, vorzugsweise zwölf sich in ihren Stauchhärten unterscheidende Polsterblöcke in einem platzsparenden und vorteilhaft nach Stauchhärten geordneten Stapel zur Verfügung stellt. Zwölf Polsterblöcke ermöglichen die Zusammenstellung über achtzig sinnvoll verschiedener Bettpolsterungen, wenn sie in gleicher Dicke einschichtig zu Bettpolsterungsgröße nebeneinander gelegt werden.

Im einfachsten Fall sind alle Polsterblöcke von gleicher Breite, die der Breite der Bettpolsterung entspricht. Sie werden dann lediglich in Längsrichtung der Bettpolsterung aneinander gelegt. Das ist auch deshalb am sinnvollsten, weil die Stauchhärte einer Härtezone aus Komfortgründen auf nahezu der gesamten Breite der Bettpolsterung gleich sein sollte, um die Lagerung des Körpers nicht von der Position abhängig zu machen.

Mehrere Polsterblöcke, deren Dicken sich zur Dicke der Bettpolsterung ergänzen, lassen sich mehrlagig übereinander schichten. Das ist auch der Fall bei je einem Set an Polsterblöcken für Matratze bzw. Unterfederung in Bettsystemen als Bettpolsterung.

Grundsätzlich ist in Bettpolsterungen nur in Krankheitsfällen eine von der ebenen Fläche abweichende Form zu empfehlen, weil jede Form lageabhängig ist. Sie reduziert die Freiheit und damit den Liegekomfort. Aus Haltbarkeitsgründen des Polstermaterials sollte ein Polster auf seiner gesamten Dicke jedoch von annähernd gleicher Stauchhärte sein, da bei Reihenschaltung von Federn die weicheren unnötig höherer Verformung ausgesetzt sind und dadurch eher ermüden. Der Komfort ergibt sich aus der Gesamt-Einsinktiefe. Es ist geschickt, diese gleichmäßig auf die Gesamtdicke des Polsters zu verteilen.

Orthopädisch wirklich wichtig sind nur zwei Härtezonen in einer Bettpolsterung: Der Schulter- und der Hüftbereich. Aus Symmetriegründen und zur Entspannung der Beine empfehlen sich drei unterschiedliche Härtezonen, die wegen der Einfachheit und Austauschbarkeit während der Beratung im Ladengeschäft von gleicher Länge sich aus Komfortgründen über fast die gesamte Breite der Bettpolsterung erstrecken sollten.

Wird ein Polsterblock für eine Härtezone eingesetzt, besteht also der einfachste orthopädisch richtige Aufbau aus drei in Längsrichtung der Bettpolsterung einlagig nebeneinander liegenden Polsterblöcken gleicher Breite, Dicke und Länge, von denen die beiden am Kopf- und Fußende der Bettpolsterung von zumindest annähernd gleicher Gesamt-Stauchhärte sind. Wenn die Beratungsvorrichtung von jeder Stauchhärte nur einen Polsterblock bietet, werden für die Kombination in der Beratung die richtigen Polsterblöcke für die wichtigen Härtezonen im Schulter- und Hüftbereich und ein dem Polsterblock für den Schulterbereich benachbarter Polsterblock für den Beinbereich gewählt. Die später dem Kunden gelieferte Bettpolsterung weist in Schulter- und Beinbereich dann etwa gleiche Stauchhärte auf.

Eine andere Möglichkeit besteht darin, einen Rahmen-Polsterblock in Größe der Bettpolsterung mit zumindest einer Ausnehmung zur Aufnahme zumindest eines anderen Polsterblocks zu versehen, um die beiden notwendigen Härtezonen zu schaffen. Die Ausnehmung kann dann im Hüft- oder Schulterbereich angeordnet sein. Ein leicht zu handhabender Baukasten entsteht aber erst, wenn zumindest die beiden notwendigen Härtezonen leicht austauschbar als Polsterblöcke einsetzbar sind. Der große Rahmen-Polsterblock braucht dann nicht bewegt zu werden.

Natürlich können auch mehrere Härtezonen von einem Polsterblock gebildet sein. Damit lässt sich eine noch feinere Abstimmung bei gleicher Anzahl an Polsterblöcken realisieren oder die Anzahl reduzieren. Durch die Koppelung zweier Härtezonen wird jedoch die Variantenvielfalt eingeschränkt.

Ein Gestell erlaubt die geordnete Ablage und damit leichten Zugriff auf die Polsterblöcke. Gleiche Breite und Länge der Polsterblöcke führt zum klarsten Erscheinungsbild. Bei hochkanter Stapelung ist jeder Polsterblock in einer übersichtlichen, nach Stauchhärten geordneten und vorteilhafterweise an den Polsterblöcken selbst oder am Gestell ausgezeichneten Reihe sofort direkt zugänglich. Das bietet die schnellste Handhabung. Da das Gestell im wesentlichen nur Stützfunktion erfüllt, ist eine Material sparende Rahmenkonstruktion aus z. B. Massivholz, Metallprofilen oder Kunststoffrohren angemessen.

Der Zugriff auf jeden Polsterblock ist am ergonomischsten, wenn die Reihe der Polsterblöcke quer zum Berater angeordnet ist, er also vor einer Längsseite steht, an der dann auch die Stauchhärten ausgezeichnet sein können.

Das Gestell kann darüber hinaus die gesamte Beratungseinrichtung, wie Polsterblöcke, Computer mit allen Komponenten und Messgeräte zu einer Einheit integrieren, die im Verkaufsraum als ein Möbel erscheint, das auf Rollen zum Einsatz bewegt werden kann. Das visuelle Ausgabegerät, z.B. Bildschirm oder Beamer, oder der gesamte Computer kann an einer Stirnseite befestigt werden.

Da jeder einzelne Polsterblock beim Zugriff an zwei gegenüberliegenden Seiten erfasst und zwischen zwei benachbarten herausgezogen werden muss, was natürlich zu erheblicher Reibung zwischen den benachbarten führt, ist die optimale Lösung, die benachbarten und alle hinter diesen benachbarten als Teil-Stapel vor der Entnahme vom Zielblock wegzuklappen. Das ermöglicht ein Gestell, dessen zur ihrer vertikalen Mittelebene spiegelsymmetrisch ausgebildete Innenflächen seiner Stirnseiten zum Abstützungskontakt mit einer Ober- oder Unterseite eines Polsterblocks einen Winkel von 8 bis 16° zur vertikalen Mittelebene bilden. In diesem Stapel steht jeder Polsterblock über zumindest Ober- oder Unterseite mit einem benachbarten Polsterblock oder mit einer Innenfläche der Stirnseiten in Abstützungskontakt. An jeder Berührungsfläche zweier Polsterblöcke lässt sich der Stapel teilen, indem die Hälften in zwei entgegengesetzte Richtungen zu den Stirnseiten des Gestells geklappt werden. Teilt man den Stapel an dem zu entnehmenden Zielblock, lässt er sich von beiden benachbarten Polsterblöcken abheben und reibungsfrei entnehmen.

Alternativ kann die beim Entnehmen eines Polsterblockes zu überwindende Reibung gegenüber den Ober- bzw. Unterseiten der benachbarten Polsterblöcke durch glatte Trennelemente, wie z. B. Folien oder sich etwa in Entnahmerichtung erstreckende Führungsleisten zwischen jeweils benachbarten Polsterblöcken, reduziert werden. Damit können die Polsterblöcke auch aus einem vertikalen Stapel flach übereinander oder aus horizontalen Stapeln hochkant nebeneinander, die auch mehrreihig auf Böden übereinander - ähnlich einem Bücherregal - angeordnet sein können, leicht entnommen werden. Das reduziert den Stellflächenbedarf weiter. Das visuelle Ausgabegerät kann dann an einer Regalseite, -rückseite, auf dem obersten Boden oder in einem separaten Gestell befestigt sein.

Der Aufbau und die Handhabung werden weiter vereinfacht, wenn als visuelles Ausgabegerät ein Bildschirm und als Eingabegerät ein auf der Bildfläche des Bildschirms befestigter Touchscreen verwendet werden. Es entfallen Tastatur, Maus und eine für deren Nutzung notwendige Stützplatte.

Die für den Kunden optimale Kombination wird mit dem visuellen Ausgabegerät angezeigt. Sicherlich ist es von Vorteil, sie durch einen Ausdruck auch auf Papier anzuzeigen und damit festzuhalten. Sie kann dann sowohl dem Berater zur Auftragsabwicklung alsauch dem Kunden als Dokument und Auftragsbestätigung ausgehändigt werden.

Mit einem Internet-Anschluss des Computers lässt sich der Auftrag auch online an die Vertriebszentrale und/oder den Hersteller weitergeben, wobei dann gleich ein voraussichtlicher Liefertermin angezeigt werden kann.

Die orthopädisch wichtigere Lage des Körpers ist die Seitenlage. Deshalb werden die Härtezonen in der Bettpolsterung für die Seitenlage optimal ausgelegt. Dazu sind die wichtigsten Messdaten: Schulterbreite und Hüftbreite. Zur Abstimmung des Arbeitspunktes der Federkennlinien der Bettpolsterung und damit für den höchstmöglichen Komfort bei befriedigender Haltbarkeit ist das Körpergewicht entscheidend. Zur Ermittlung dieser Messdaten bieten sich ein Messschieber und eine Waage an. Die Daten können vom Berater abgelesen und über den Touchscreen in auf dem Bildschirm sichtbare, vorprogrammierte Felder sofort visuell kontrollierbar eingegeben werden, die dann auf Knopfdruck zur Berechnung der optimalen Kombination eingelesen werden. Sie können aber mit elektronischen Messgeräten als Eingabegeräte auch direkt eingelesen werden. Das schließt kleine, häufige, aktuelle menschliche Fehler aus, verkompliziert aber die Anlage und deren Einrichtung mit dem Risiko mächtigerer menschlicher Fehler und höherem Ausfallrisiko mit großem Wiederherstellungsaufwand. Die Handhabung wird durch die Kabel nicht unbedingt erleichtert. Die Kosten sind höher.

Über diese Funktionen hinaus kann die Beratungsvorrichtung auf Knopfdruck grafische Darstellungen oder Video-Präsentationen für die Beratung zeigen, die der Berater je nach Bedarf gezielt abrufen kann. Dazu sind auch Lautsprecher integrierbar. Vorteil ist, dass das Wissen zum Produkt 100% authentisch den Kunden erreicht und der Berater sich auf die Erfüllung kundenspezifischer Wünsche und Eigenheiten konzentrieren kann. Die Beratungsvorrichtung kann Dauer-Präsentationen während der gesamten Öffnungszeit im Hintergrund, z. B. für wartende Kunden, zeigen, die auch als Bildschirmschoner nur während der ungenutzten Zeit des Computers aktiviert werden können.

Der Computer kann über Netzkabel und Steckdose mit Strom versorgt werden, oder über einen Akku, der dann jede Nacht durch ein Ladegerät ebenfalls über Netzkabel und Steckdose aufzuladen ist. Ein rollbares Gestell bietet dann größere Bewegungsfreiheit. Die Kosten liegen ca. 100 € höher. Für Dauer-Präsentationen ist Netzbetrieb vorzuziehen.

Geräuschloser Betrieb ist mit lüfterlosen Prozessoren und Netzteilen und Flash- oder USB-Speichern statt Festplatten möglich. Der Leistungsverbrauch liegt vorteilhaft unter 50 W und kann durch Standby unter 10W gesenkt werden. Da die Prozessortaktung deutlich geringer ist, sind zum Hochfahren des Computers etwa 1 bis 5 Minuten erforderlich.

Zum Austausch sollten alle Komponenten des Computers leicht trennbar und Transport unempfindlich sein. Das kann durch zumindest Halbschalen oder Käfige als Abdeckung, die einfach mit versendet werden oder Baugruppen mit jeweils eigenem Gehäuse erreicht werden, die nur noch zu verkabeln sind. Es ist auch möglich, einen Computer ohne mechanische Bauteile in einem Bildschirmgehäuse zu integrieren. Dann wird immer der komplette Bildschirm getauscht. Von außen bequem erreichbare Wechselspeicher - z. B. Speicherkarten oder USB-Sticks - vereinfachen den Austausch der Software bei Fehlern oder zum Update.

**Weitere Merkmale** und Vorteile der Erfindung ergeben sich aus den Ansprüchen und der nachstehenden Beschreibung in Verbindung mit den Zeichnungen, in denen zwei Ausführungsbeispiele des Gegenstands der Erfindung schematisch veranschaulicht sind.

In den **Zeichnungen** zeigen:
- **Fig. 1**: eine perspektivische Darstellung eines Ausführungsbeispiels einer erfindungsgemäßen Beratungsvorrichtung,
- **Fig. 2**: je eine Vorderansicht eines Stapels aus Polsterblöcken zweier weiterer Ausführungsbeispiele der Erfindung, die zur Unterscheidung der Stauchhärten nummeriert sind,
- **Fig. 3 bis 5**: je eine Vorderansicht einer Kombination aus Polsterblöcken der Ausführungsbeispiele der Fig. 2 zu einer ganzen Bettpolsterung.

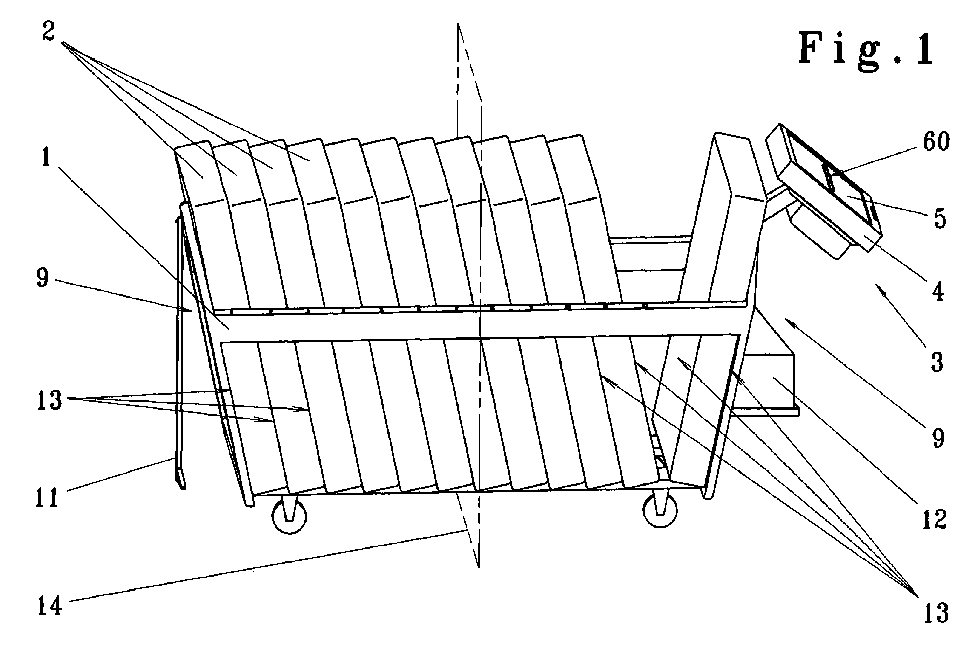

**Fig. 1** zeigt eine komplette Beratungsvorrichtung. In einem auf vier Rollen frei beweglichen Gestell 1 in Holzrahmenkonstruktion sind zwölf Polsterblöcke 2 gleicher Abmessungen hochkant in einem Winkel von 12° zur vertikalen Mittelebene 14 nach ihren unterschiedlichen Stauchhärten geordnet gestapelt. Die Höhe der Polsterblöcke 2 entspricht der Breite, ihre Höhe einem Drittel der Länge der Bettpolsterung 7, zu denen sich jeweils drei Polsterblöcke 2 durch einfaches Nebeneinanderlegen kombinieren lassen. Die Innenflächen der Stirnseiten 9 des Gestells 1 sind zu ihrer vertikalen Mittelebene 14 spiegelsymmetrisch angeordnet. Der Stapel der Polsterblöcke 2 ist in zwei Teil-Stapel zwischen dem ersten und zweiten Polsterblock 2 von rechts geteilt, indem der linke Teil an die linke Stirnseite 9 und der rechte an die rechte Stirnseite 9 geklappt sind. Diese beiden Polsterblöcke 2 lassen sich wahlweise, nachdem sie in vertikale Lage gebracht wurden, reibungsfrei entnehmen. Man teilt also den Stapel neben dem Polsterblock, den man entnehmen möchte. Jeder Polsterblock 2 im Stapel steht mit zumindest seiner Ober- oder Unterseite 13 mit einem benachbarten Polsterblock 2 oder mit der Innenfläche einer der Stirnseiten 9, die ihn als Rahmen auf mehr als 50% seiner Höhe stützt, in Abstützungskontakt. Die unterschiedlichen Stauchhärten der Polsterblöcke 2 sind auf der Oberkante der quer vor dem Betrachter angeordneten oberen Längsstrebe des Gestells 1 mit Zahlen von eins bis zwölf ausgezeichnet.

An der Außenseite der linken Stirnseite 9 des Gestells 1 ist ein Messschieber als Messgerät 11 zum Messen der Schulter- und Hüftbreite eines künftigen Benutzers aufgehängt. An der rechten Stirnseite 9 des Gestells 1 ist über einen Tragarm und eine Trägerplatte mit VESA-Bohrungen ein Bildschirm als visuelles Ausgabegerät 4 mit einem Touchscreen als Eingabegerät 5 in ergonomisch günstiger Schräglage und auf der anderen Seite der Trägerplatte hinter einer u-förmigen Abdeckung, die auch den Schalter für den Computer 3 trägt, die Hauptplatine des Computers 3 mit Prozessor, Arbeitsspeicher, USB-Speicher und Netzteilplatine befestigt. Alle Komponenten kommen ohne bewegte Teile aus. Folge ist der geringe Einbauraum und absolute Geräuschlosigkeit. Das Netzteil befindet sich an der Unterseite des Gestells 1 und ist mit seinem Netzkabel mit einer Steckdose zu verbinden.

Der Bildschirm 4 zeigt eine vom Computer 3 berechnete und benannte Kombination 60 aus drei Polsterblöcken 2 an, die mit einem ebenfalls in die Beratungsvorrichtung integrierten Drucker 12, der auf einer an der rechten Stirnseite 9 befestigten Konsole abgestellt ist, in einem Dokument zusätzlich ausdruckbar ist.

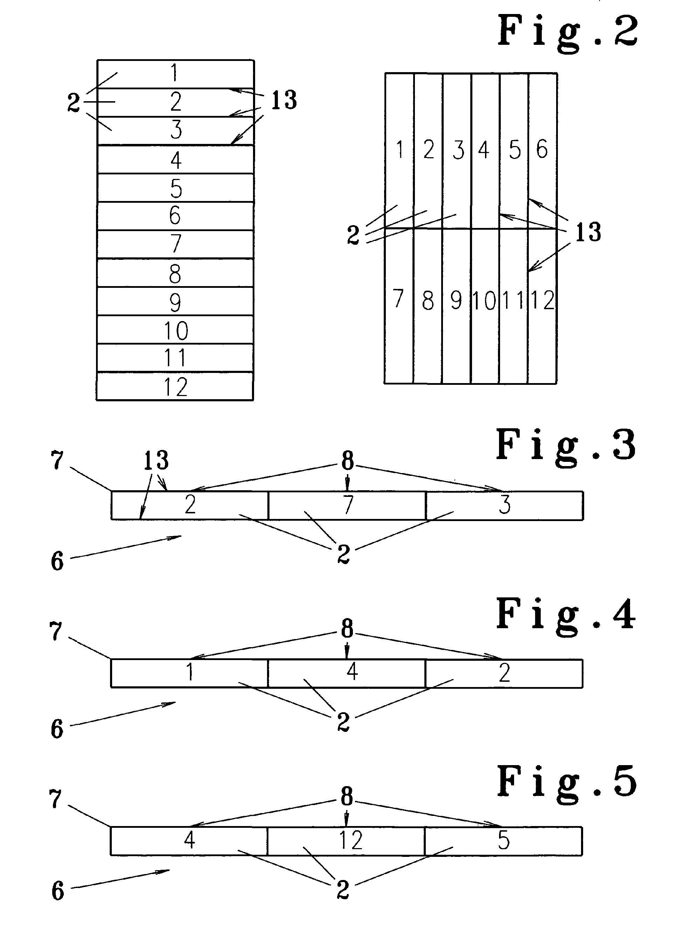

In **Fig. 2** sind je ein vertikaler und ein doppelreihig horizontaler Stapel mit hochkanter Stapelung von mit ihren Ober- und Unterseiten 13 flach aneinander liegenden Polsterblöcken 2 gleicher Größe dargestellt, die nach ihren Stauchhärten geordnet und mit diesen entsprechenden Zahlen ausgezeichnet sind. Ihre Ober- und Unterseiten 13 entsprechen denen der Bettpolsterungen 7, zu denen sich eine Vielzahl von verschiedenen einlagigen, horizontalen Kombinationen 6 mit jeweils drei horizontal nebeneinander liegenden Härtezonen 8 unterschiedlicher Gesamt-Stauchhärte aus jeweils drei aneinander liegenden Polsterblöcken 2 ergänzen, von denen drei beispielhaft in den **Fig. 3** bis **5** gezeigt sind.

In diesen Ausführungsbeispielen bildet jeweils ein Polsterblock 2 eine Härtezone 8. Dadurch ist seine Stauchhärte identisch mit der Gesamt-Stauchhärte der Härtezone 8. Ihre Größen sind gleich. Die Länge der Polsterblöcke 2 entspricht einem Drittel der Länge der Bettpolsterungen 7, ihre Breite und Dicke der der Bettpolsterungen 7.

Dementsprechend sind im Rahmen der Ansprüche auch anderweitige Ausgestaltungen und Modifikationen denkbar und möglich. Der Gegenstand der Erfindung ist nicht auf die in den Zeichnungen dargestellten und vorstehend beschriebenen Ausführungsbeispiele beschränkt.

## Patentansprüche

1. Beratungsvorrichtung für Bettpolsterungen (7), wie Matratzen, Unterfederungen oder Bettsysteme, mit zumindest einem Messgerät (11) zur Ermittlung von Messdaten, einem Computer (3) aus zumindest je einer/m Hauptplatine, Prozessor, Speicher, visuellen Ausgabegerät (4) und Eingabegerät (5) und zumindest drei sich in ihren Stauchhärten unterscheidenden Polsterblöcken (2), die in mehreren verschiedenen Kombinationen (6,60) mit jeweils zumindest zwei horizontal nebeneinander liegenden Härtezonen (8) unterschiedlicher Gesamt-Stauchhärte zu einer Bettpolsterung (7) zusammenlegbar sind, aus denen der mit einer entsprechenden Software programmierte Computer (3) zumindest nach Eingabe der Messdaten des Körpers eines künftigen Benutzers zumindest eine Kombination (60) berechnet, benennt und anzeigt.

2. Beratungsvorrichtung nach Anspruch 1, **dadurch gekennzeichnet, dass** die Kombinationen (6,60) aus horizontal nebeneinander angeordneten Polsterblöcken (12) vorzugsweise gleicher Dicke bestehen und insbesondere einlagig sind.

3. Beratungsvorrichtung nach einem der Ansprüche 1 oder 2, **dadurch gekennzeichnet, dass** zumindest ein Großteil, insbesondere alle Polsterblöcke (12), vorzugsweise entsprechend einer kompletten Matratze als Bettpolsterung (7), aus Kern, insbesondere mit Auflagen, und eigener Hülle aufgebaut ist/sind.

4. Beratungsvorrichtung nach einem der Ansprüche 1 bis 3, **gekennzeichnet durch** über fünf, vorzugsweise zwölf, sich in ihren Stauchhärten unterscheidende Polsterblöcke (2), insbesondere gleicher Dicke, von denen zumindest ein Großteil stapelbar ist.

5. Beratungsvorrichtung nach einem der Ansprüche 1 bis 4, **dadurch gekennzeichnet, dass** die Breite mehrerer einzelner Polsterblöcke (12), insbesondere aller, gleich ist und vorzugsweise der Breite der Bettpolsterung (7) entspricht.

6. Beratungsvorrichtung nach einem der Ansprüche 1 bis 5, **dadurch gekennzeichnet, dass** jeweils ein Polsterblock (12) eine Härtezone (8) der Bettpolsterung (7) bildet.

7. Beratungsvorrichtung nach einem der Ansprüche 1 bis 5, **dadurch gekennzeichnet, dass** jeweils ein Polsterblock (12) mehrere Härtezonen (8) der Bettpolsterung (7) bildet.

8. Beratungsvorrichtung nach einem der Ansprüche 1 bis 7, **dadurch gekennzeichnet, dass** jeweils vorzugsweise drei Polsterblöcke (2) gleicher Breite, Dicke und insbesondere Länge in mehreren verschiedenen horizontalen Kombinationen (6,60) zu einer Matratze, einer Unterfederung oder einem Bettsystem als Bettpolsterung (7) kombinierbar sind.

9. Beratungsvorrichtung nach einem der Ansprüche 1 bis 8, **gekennzeichnet durch** ein Gestell (1), in dem zumindest ein Großteil der Polsterblöcke (2) insbesondere gleicher Breite und Länge, vorzugsweise im wesentlichen hochkant in einer nach Stauchhärten zu ordnenden und insbesondere auszuzeichnenden Reihe stapelbar ist.

10. Beratungsvorrichtung nach Anspruch 9, **dadurch gekennzeichnet, dass** das Gestell (1) Polsterblöcke (2), Komponenten des Computers (3) und insbesondere zumindest ein Messgerät (11) zu einer Baueinheit verbindet, wobei vorzugsweise das visuelle Ausgabegerät (4) an einer Stirnseite (9) befestigbar ist.

11. Beratungsvorrichtung nach einem der Ansprüche 9 oder 10, **gekennzeichnet durch** ein Gestell (1) insbesondere in Rahmenkonstruktion, dessen zu ihrer vertikalen Mittelebene (14) spiegelsymmetrisch ausgebildete Innenflächen seiner Stirnseiten (9) zum Abstützungskontakt mit einer Ober- oder Unterseite (13) eines Polsterblocks (2) vorzugsweise einen Winkel von 8 bis 16° zur vertikalen Mittelebene (14) bilden und jeder in einem teilbaren, horizontalen Stapel vom Gestell (1) aufgenommene Polsterblock (2) über zumindest Ober- oder Unterseite (13) mit einem benachbarten Polsterblock (2) oder mit der Innenfläche einer der Stirnseiten (9) in Abstützungskontakt steht.

12. Beratungsvorrichtung nach einem der Ansprüche 1 bis 11, **gekennzeichnet durch** einen Bildschirm als visuelles Ausgabegerät (4) und insbesondere einen auf seiner Bildfläche befestigten Touchscreen als Eingabegerät (5).

13. Beratungsvorrichtung nach einem der Ansprüche 1 bis 12, **gekennzeichnet durch** einen Drucker (12) zur Anzeige zumindest einer Kombination (60), der insbesondere mit dem Gestell (1) zu einer Baueinheit integriert ist, vorzugsweise auf einem am Gestell (1) befestigten Boden abstellbar ist.

14. Beratungsvorrichtung nach einem der Ansprüche 1 bis 13, **dadurch gekennzeichnet, dass** die Messdaten des Körpers eines künftigen Benutzers Schulterbreite, Hüftbreite und Körpergewicht sind.

15. Beratungsvorrichtung nach einem der Ansprüche 1 bis 14, **gekennzeichnet durch** einen Messschieber und insbesondere eine Waage als Messgeräte (11), wobei vorzugsweise zumindest ein Messgerät (11) ein Eingabegerät (5) ist.
